# EUROPEAN PATENT APPLICATION

(11) **EP 4 822 537 A1**
(43) Date of publication of application: **14.10.2026**
(21) Application number: 24964145.7
(22) Date of filing: 24.12.2024
(51) Int. Cl.: G06F 11/07, G06F 11/16, G06F 11/20, B60R 16/023, H04L 12/40

(54) **SIGNAL PROCESSING DEVICE AND VEHICLE CONTROL DEVICE INCLUDING SAME**

(71) Applicant: LG Electronics Inc., Yeongdeungpo-gu Seoul 07336 (KR)
(72) Inventor: JO, Minho, Seoul 06772 (KR); KIM, Ieesak, Seoul 06772 (KR); HONG, Hyuntaek, Seoul 06772 (KR); LEE, Sanghun, Seoul 06772 (KR)
(74) Representative: Vossius & Partner Patentanwälte Rechtsanwälte mbB
(86) International application number: PCT/KR2024/021072
(87) International publication number: WO 2026/141721

(57) **Abstract**

A signal processing device and a vehicle control apparatus including the same according to an embodiment of the present disclosure include: a memory to store echo request message from the zonal signal processing device; and a processor to transmit echo reply message corresponding to the echo request message, wherein the processor is configured to execute network controller, select candidate zonal signal processing device for replacing the network controller based on processor resource information, included in the echo request message, of a processor in each zonal signal processing device, and transmit the echo reply message including information regarding the selected candidate zonal signal processing device. Accordingly, in response to an abnormality in the network controller, a substitute network controller in a candidate region that replaces the abnormal network controller operates, such that in-vehicle networking can be stably provided.

## Description

### BACKGROUND

### 1. Technical Field

The present disclosure relates to a server, and more particularly to a signal processing device capable of stably providing in-vehicle networking, and a vehicle control apparatus including the same.

### 2. Description of the Related Art

A vehicle is a machine that allows a user to move in a desired direction. A typical example of the vehicle is an automobile.

Meanwhile, a signal processing device for vehicles is mounted in the vehicle for convenience of users who use the vehicle.

The signal processing device in the vehicle receives sensor data from various vehicle internal sensor devices and processes the sensor data.

Meanwhile, as the type and number of sensors mounted in the vehicle increase for the Advanced Driver Assistance System (ADAS) or autonomous driving, etc., the amount of data required to be processed also increases.

Accordingly, a plurality of signal processing devices are required in the vehicle, as well as networking for data exchange between the plurality of signal processing devices.

Meanwhile, various services executed in the signal processing device of the vehicle may be forged or tampered with by an external attack and the like.

Meanwhile, unlike the IT domain, specific services executed in the vehicle should be stably operated, and even if a problem occurs in some function, rapid response to the problem should be ensured. Further, rapid recovery is required in order to provide a stable operation when a problem occurs.

Meanwhile, as various and highly advanced functions are executed in a vehicle, it may be difficult to provide sufficient resources for the signal processing device due to a limited embedded environment.

Accordingly, there is a need for research on stable networking for an in-vehicle signal processing device.

### SUMMARY

It is an objective of the present disclosure to provide a signal processing device capable of stably providing in-vehicle networking, and a vehicle display apparatus including the same.

It is another objective of the present disclosure to provide a signal processing device capable of rapidly providing in-vehicle networking in response to an abnormality in the signal processing device, and a vehicle display apparatus including the same.

It is yet another objective of the present disclosure to provide a signal processing device capable of stably providing in-vehicle networking by operating a substitute network controller in a candidate region in response to an abnormality in a network controller, and a vehicle display apparatus including the signal processing device.

In accordance with an aspect of the present disclosure, the above and other objectives can be accomplished by providing a signal processing device configured to exchange data with at least one zonal signal processing device, the signal processing device including: a memory configured to store an echo request message from the zonal signal processing device; and a processor configured to transmit an echo reply message corresponding to the echo request message, wherein the processor is configured to execute a network controller, select a candidate zonal signal processing device for replacing the network controller based on processor resource information, included in the echo request message, of a processor in each zonal signal processing device, and transmit the echo reply message including information regarding the selected candidate zonal signal processing device.

Meanwhile, the processor can be configured to transmit an echo reply message, including information regarding the selected candidate zonal signal processing device and network information access key information, to the selected zonal signal processing device.

Meanwhile, the processor can be configured to transmit a first echo reply message, including information regarding the selected candidate zonal signal processing device and network information access key information, to the selected zonal signal processing device, and transmit a second echo reply message, including information regarding the selected candidate zonal signal processing device, to an unselected zonal signal processing device.

Meanwhile, the processor can be configured to execute an application, and execute a network configuration interface configured to receive a network configuration request from the application and transmit network configuration data to the application.

Meanwhile, the network configuration interface can be connected to the application and the network controller executed in the processor, and after operation of the network controller stops, is connected to the application and a network controller in the selected candidate zonal signal processing device.

Meanwhile, in response to receiving the echo request message, the processor can be configured to select the candidate zonal signal processing device and transmit the echo reply message corresponding to the echo request message.

Meanwhile, in response to an abnormality in the network controller, the processor can be configured not to transmit the echo reply message.

Meanwhile, the processor can be configured to execute a network switch and a communication manager, wherein the communication manager can be configured to connect a first port to a Software Defined Network (SDN) controller and a second port to the network switch and connect the first port to a third port and a fourth port, and can be connected to a communication manager in a first zonal signal processing device through the third port and connected to a communication manager in a second zonal signal processing device through the fourth port.

In accordance with another aspect of the present disclosure, the above and other objectives can be accomplished by providing a vehicle control apparatus including: a central signal processing device including a processor configured to execute a network controller, a network switch, and a communication manager; and at least one zonal signal processing device, wherein in response to an abnormality in the network controller, a first zonal signal processing device is configured to replace the network controller of the central signal processing device.

Meanwhile, in response to selection of the first zonal signal processing device among a plurality of zonal signal processing devices and replacement of the network controller of the central signal processing device while an abnormality in the network controller of the central signal processing device, the first zonal signal processing device can be activate and operate at least a portion of a network controller in the first zonal signal processing device.

Meanwhile, in response to not receiving an echo reply message within a predetermined period of time from the network controller of the central signal processing device, a communication manager of the first zonal signal processing device can be configured to transmit an activation signal to a Software Defined Network (SDN) controller in the network controller of the first zonal signal processing device, and the SDN controller in the network controller of the first zonal signal processing device can be activated based on the activation signal.

Meanwhile, the communication manager of the first zonal signal processing device can be configured to connect a first port to the SDN controller and a second port to the network switch and connect the first port to a third port and a fourth port, and can be connected to the communication manager in the central signal processing device through the third port and connected to a communication manager in a second zonal signal processing device through the fourth port.

Meanwhile, the first zonal signal processing device can be configured to transmit an echo request message, including resource information of the processor, to the central signal processing device, and receive an echo reply message, including information regarding the selected candidate zonal signal processing device, from the central signal processing device.

Meanwhile, the first zonal signal processing device can be configured to transmit an echo request message, including resource information of the processor, to the central signal processing device, and in response to not receiving a subsequent echo reply message after receiving a first echo reply message, including information regarding the selected candidate zonal signal processing device and network information access key information, from the central signal processing device, the first zonal signal processing device can be configured to activate at least a portion of the network controller for operation.

Meanwhile, the central signal processing device can be configured to receive an echo request message from the at least one zonal signal processing device, select a candidate zonal signal processing device for replacing the network controller based on processor resource information, included in the echo request message, of a processor in each zonal signal processing device, and transmit an echo reply message including information regarding the selected candidate zonal signal processing device.

Meanwhile, the central signal processing device can be configured to transmit an echo reply message, including information regarding the selected candidate zonal signal processing device and network information access key information, to the selected zonal signal processing device.

Meanwhile, the central signal processing device can be configured to transmit a first echo reply message, including information regarding the selected candidate zonal signal processing device and network information access key information, to the selected zonal signal processing device, and transmit a second echo reply message, including information regarding the selected candidate zonal signal processing device, to an unselected zonal signal processing device.

Meanwhile, the central signal processing device can be configured to execute an application, and execute a network configuration interface configured to receive a network configuration request from the application and transmit network configuration data to the application.

Meanwhile, the network configuration interface in the central signal processing device can be connected to the application and the network controller in the central signal processing device, and after operation of the network controller in the central signal processing device stops, can be connected to the application and a network controller in the selected candidate zonal signal processing device.

Meanwhile, in response to receiving an echo request message, the central signal processing device can be configured to select a candidate zonal signal processing device and transmit an echo reply message corresponding to the echo request message.

Meanwhile, in response to an abnormality in the network controller, the processor can be configured not to transmit the echo reply message.

### EFFECTS OF THE DISCLOSURE

A signal processing device according to an embodiment of the present disclosure is a signal processing device configured to exchange data with at least one zonal signal processing device, and including: a memory configured to store an echo request message from the zonal signal processing device; and a processor configured to transmit an echo reply message corresponding to the echo request message, wherein the processor is configured to execute a network controller, select a candidate zonal signal processing device for replacing the network controller based on processor resource information, included in the echo request message, of a processor in each zonal signal processing device, and transmit the echo reply message including information regarding the selected candidate zonal signal processing device. Accordingly, in-vehicle networking can be stably provided. Further, in-vehicle networking can be rapidly provided in response to an abnormality in the signal processing device.

Meanwhile, the processor can be configured to transmit an echo reply message, including information regarding the selected candidate zonal signal processing device and network information access key information, to the selected zonal signal processing device. Accordingly, in-vehicle networking can be stably provided.

Meanwhile, the processor can be configured to transmit a first echo reply message, including information regarding the selected candidate zonal signal processing device and network information access key information, to the selected zonal signal processing device, and transmit a second echo reply message, including information regarding the selected candidate zonal signal processing device, to an unselected zonal signal processing device. Accordingly, in-vehicle networking can be stably provided.

Meanwhile, the processor can be configured to execute an application, and execute a network configuration interface configured to receive a network configuration request from the application and transmit network configuration data to the application. Accordingly, in-vehicle networking can be stably provided.

Meanwhile, the network configuration interface can be connected to the application and the network controller executed in the processor, and after operation of the network controller stops, is connected to the application and a network controller in the selected candidate zonal signal processing device. Accordingly, in-vehicle networking can be stably provided.

Meanwhile, in response to receiving the echo request message, the processor can be configured to select the candidate zonal signal processing device and transmit the echo reply message corresponding to the echo request message. Accordingly, in-vehicle networking can be stably provided.

Meanwhile, in response to an abnormality in the network controller, the processor can be configured not to transmit the echo reply message. Accordingly, in-vehicle networking can be stably provided.

Meanwhile, the processor can be configured to execute a network switch and a communication manager, wherein the communication manager can be configured to connect a first port to a Software Defined Network (SDN) controller and a second port to the network switch and connect the first port to a third port and a fourth port, and can be connected to a communication manager in a first zonal signal processing device through the third port and connected to a communication manager in a second zonal signal processing device through the fourth port. Accordingly, in-vehicle networking can be stably provided.

A vehicle control apparatus according to an embodiment of the present disclosure includes: a central signal processing device including a processor configured to execute a network controller, a network switch, and a communication manager; and at least one zonal signal processing device, wherein in response to an abnormality in the network controller, a first zonal signal processing device is configured to replace the network controller of the central signal processing device. Accordingly, in-vehicle networking can be stably provided. Further, in-vehicle networking can be rapidly provided in response to an abnormality in the signal processing device. Particularly, in response to an abnormality in the network controller, a substitute network controller in a candidate region that replaces the abnormal network controller operates, such that in-vehicle networking can be stably provided.

Meanwhile, in response to selection of the first zonal signal processing device among a plurality of zonal signal processing devices and replacement of the network controller of the central signal processing device while an abnormality in the network controller of the central signal processing device, the first zonal signal processing device can be activate and operate at least a portion of a network controller in the first zonal signal processing device. Accordingly, in response to an abnormality in the network controller, a substitute network controller in a candidate region that replaces the abnormal network controller operates, such that in-vehicle networking can be stably provided.

Meanwhile, in response to not receiving an echo reply message within a predetermined period of time from the network controller of the central signal processing device, a communication manager of the first zonal signal processing device can be configured to transmit an activation signal to a Software Defined Network (SDN) controller in the network controller of the first zonal signal processing device, and the SDN controller in the network controller of the first zonal signal processing device can be activated based on the activation signal. Accordingly, in response to an abnormality in the network controller, a substitute network controller in a candidate region that replaces the abnormal network controller operates, such that in-vehicle networking can be stably provided.

Meanwhile, the communication manager of the first zonal signal processing device can be configured to connect a first port to the SDN controller and a second port to the network switch and connect the first port to a third port and a fourth port, and can be connected to the communication manager in the central signal processing device through the third port and connected to a communication manager in a second zonal signal processing device through the fourth port. Accordingly, in response to an abnormality in the network controller, a substitute network controller in a candidate region that replaces the abnormal network controller operates, such that in-vehicle networking can be stably provided.

Meanwhile, the first zonal signal processing device can be configured to transmit an echo request message, including resource information of the processor, to the central signal processing device, and receive an echo reply message, including information regarding the selected candidate zonal signal processing device, from the central signal processing device. Accordingly, in-vehicle networking can be stably provided.

Meanwhile, the first zonal signal processing device can be configured to transmit an echo request message, including resource information of the processor, to the central signal processing device, and in response to not receiving a subsequent echo reply message after receiving a first echo reply message, including information regarding the selected candidate zonal signal processing device and network information access key information, from the central signal processing device, the first zonal signal processing device can be configured to activate at least a portion of the network controller for operation. Accordingly, in-vehicle networking can be stably provided.

Meanwhile, the central signal processing device can be configured to receive an echo request message from the at least one zonal signal processing device, select a candidate zonal signal processing device for replacing the network controller based on processor resource information, included in the echo request message, of a processor in each zonal signal processing device, and transmit an echo reply message including information regarding the selected candidate zonal signal processing device. Accordingly, in-vehicle networking can be stably provided.

Meanwhile, the central signal processing device can be configured to transmit an echo reply message, including information regarding the selected candidate zonal signal processing device and network information access key information, to the selected zonal signal processing device. Accordingly, in-vehicle networking can be stably provided.

Meanwhile, the central signal processing device can be configured to transmit a first echo reply message, including information regarding the selected candidate zonal signal processing device and network information access key information, to the selected zonal signal processing device, and transmit a second echo reply message, including information regarding the selected candidate zonal signal processing device, to an unselected zonal signal processing device.

Meanwhile, the central signal processing device can be configured to execute an application, and execute a network configuration interface configured to receive a network configuration request from the application and transmit network configuration data to the application. Accordingly, in-vehicle networking can be stably provided.

Meanwhile, the network configuration interface in the central signal processing device can be connected to the application and the network controller in the central signal processing device, and after operation of the network controller in the central signal processing device stops, can be connected to the application and a network controller in the selected candidate zonal signal processing device. Accordingly, in-vehicle networking can be stably provided.

Meanwhile, in response to receiving an echo request message, the central signal processing device can be configured to select a candidate zonal signal processing device and transmit an echo reply message corresponding to the echo request message. Accordingly, in-vehicle networking can be stably provided.

Meanwhile, in response to an abnormality in the network controller, the processor can be configured not to transmit the echo reply message. Accordingly, in-vehicle networking can be stably provided.

### BRIEF DESCRIPTION OF THE DRAWINGS

FIG. 1 is a diagram illustrating an example of a vehicle system including a vehicle and a server;
FIG. 2 is a diagram illustrating an architecture of a vehicle signal processing device in the vehicle of FIG. 1;
FIG. 3A is a diagram illustrating an example of a vehicle display apparatus in a vehicle;
FIG. 3B is a diagram illustrating another example of a vehicle display apparatus in a vehicle;
FIG. 4 is an exemplary internal block diagram of the vehicle of FIG. 1;
FIG. 5 is an exemplary block diagram of a vehicle control apparatus according to an embodiment of the present disclosure;
FIG. 6 is an exemplary internal block diagram of a signal processing device according to an embodiment of the present disclosure;
FIGS. 7 to 9G are diagrams referred to in the description of FIG. 6;
FIG. 10 is a flowchart illustrating an example of operation of a vehicle control apparatus according to an embodiment of the present disclosure; and
FIG. 11 is a flowchart illustrating another example of operation of a vehicle control apparatus according to an embodiment of the present disclosure.

### DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" can be used interchangeably.

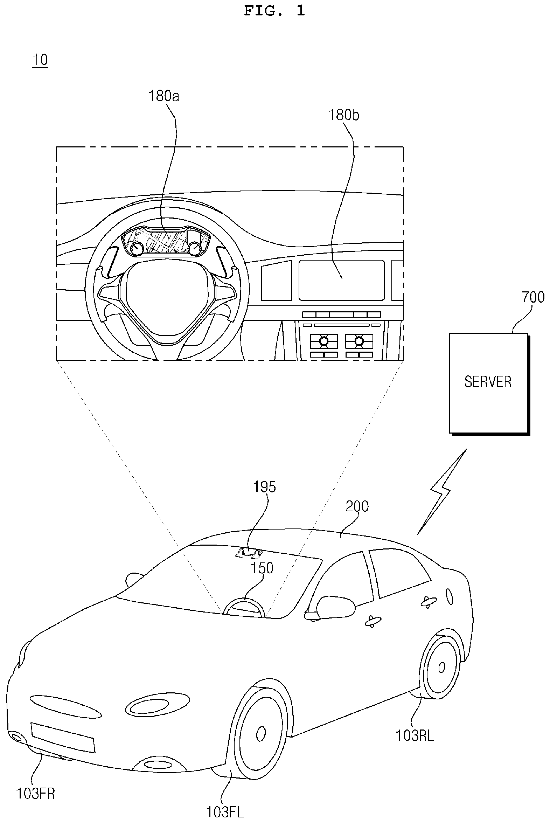

FIG. 1 is a diagram illustrating an example of a vehicle system including a vehicle and a server.

Referring to the figure, a vehicle system 10 includes a vehicle 200 and a server 900 configured to exchange data with the vehicle 200.

The vehicle 200 is moved by a plurality of wheels 103FR, 103FL, 103RL,... rotated by a power source and a steering wheel 150 configured to adjust an advancing direction of the vehicle 200.

Meanwhile, the vehicle 200 can be provided with a camera 195 configured to acquire an image of the front of the vehicle.

Meanwhile, the vehicle 200 can be further provided therein with a plurality of displays 180a and 180b configured to display images and information.

In FIG. 1, a cluster display 180a and an audio video navigation (AVN) display 180b are illustrated as the plurality of displays 180a and 180b. In addition, a head up display (HUD) can also be used.

Meanwhile, the audio video navigation (AVN) display 180b can also be called a center information display.

Meanwhile, the vehicle 200 described in this specification can be a concept including all of a vehicle having an engine as a power source, a hybrid vehicle having an engine and an electric motor as a power source, and an electric vehicle having an electric motor as a power source.

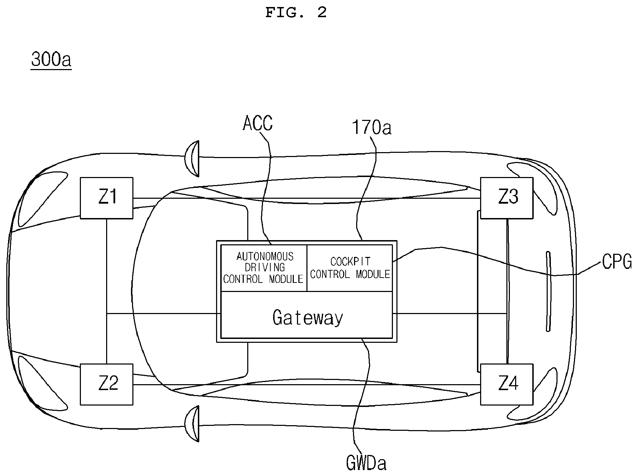

FIG. 2 is a diagram illustrating an architecture of a vehicle signal processing device in the vehicle of FIG. 1.

Referring to the figure, an architecture 300a of a vehicle signal processing system in the vehicle 200 can correspond to a zone-based architecture.

Accordingly, vehicle internal sensor devices and processors can be mounted in each of a plurality of zones Z1 to Z4, and a signal processing device 170a including a vehicle communication gateway GWDa can be disposed at the center of the plurality of zones Z1 to Z4.

Meanwhile, the signal processing device 170a can further include an autonomous driving control module ACC, a cockpit control module CPG, etc., in addition to the vehicle communication gateway GWDa.

The vehicle communication gateway GWDa in the signal processing device 170a can be a High Performance Computing (HPC) gateway.

That is, as an integrated HPC gateway, the signal processing device 170a of FIG. 2 can exchange data with an external communication module (not shown) or processors (not shown) in the plurality of zones Z1 to Z4.

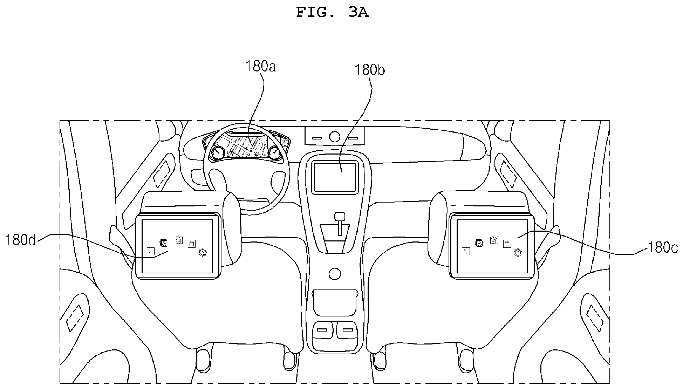

FIG. 3A is a diagram illustrating an example of a vehicle display apparatus in a vehicle.

Referring to the figure, a cluster display 180a, an audio video navigation (AVN) display 180b, rear seat entertainment displays 180c and 180d, and a rear-view mirror display (not shown) can be mounted in the vehicle.

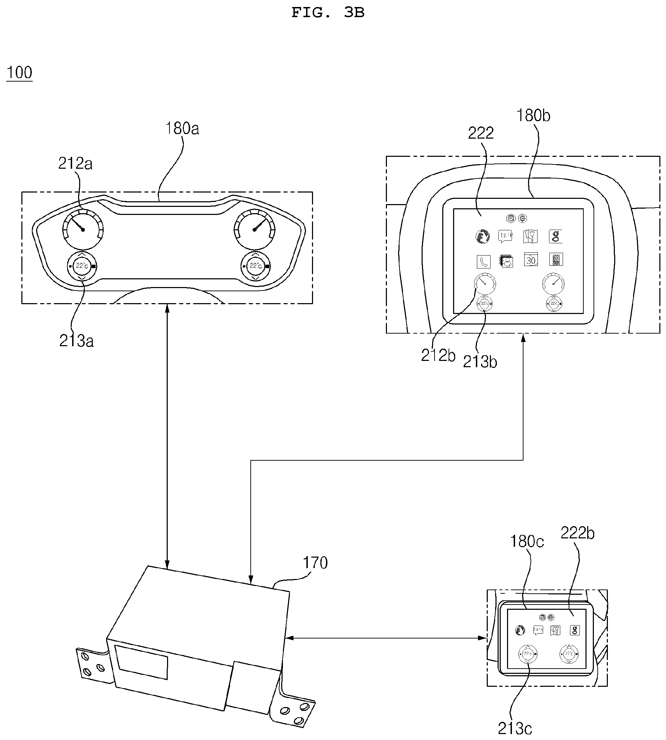

FIG. 3B is a diagram illustrating another example of a vehicle display apparatus in a vehicle.

A vehicle display apparatus 100 according to the embodiment of the present disclosure can include a plurality of displays 180a and 180b and a signal processing device 170 configured to perform signal processing in order to display images and information on the plurality of displays 180a and 180b, and to output an image signal to at least one of the displays 180a and 180b.

The first display 180a, which is one of the plurality of displays 180a and 180b, can be a cluster display 180a configured to display a driving state and operation information, and the second display 180b can be an audio video navigation (AVN) display 180b configured to display vehicle driving information, a navigation map, various kinds of entertainment information, or an image.

The signal processing device 170 can have a processor 175 provided therein, and first to third virtual machines (not shown) can be executed by a hypervisor 505 in the processor 175.

The second virtual machine (not shown) can be operated for the first display 180a, and the third virtual machine (not shown) can be operated for the second display 180b.

Meanwhile, the first virtual machine (not shown) in the processor 175 can be configured to set a shared memory 508 based on the hypervisor 505 for transmission of the same data to the second virtual machine (not shown) and the third virtual machine (not shown). Consequently, the first display 180a and the second display 180b in the vehicle can display the same information or the same images in a synchronized state.

Meanwhile, the first virtual machine (not shown) in the processor 175 shares at least some of data with the second virtual machine (not shown) and the third virtual machine (not shown) for divided processing of data. Consequently, the plurality of virtual machines for the plurality of displays in the vehicle can divide and process data.

Meanwhile, the first virtual machine (not shown) in the processor 175 can receive and process wheel speed sensor data of the vehicle, and can transmit the processed wheel speed sensor data to at least one of the second virtual machine (not shown) or the third virtual machine (not shown). Consequently, at least one virtual machine can share the wheel speed sensor data of the vehicle.

Meanwhile, the vehicle display apparatus 100 according to the embodiment of the present disclosure can further include a rear seat entertainment (RSE) display 180c configured to display driving state information, simple navigation information, various kinds of entertainment information, or an image.

The signal processing device 170 can further execute a fourth virtual machine (not shown), in addition to the first to third virtual machines (not shown), on the hypervisor 505 in the processor 175 to control the RSE display 180c.

Consequently, it is possible to control various displays 180a to 180c using a single signal processing device 170.

Meanwhile, some of the plurality of displays 180a to 180c can be operated based on a Linux Operating System (OS), and others can be operated based on a Web Operating System (OS).

The signal processing device 170 according to the embodiment of the present disclosure can be configured to display the same information or the same images in a synchronized state on the displays 180a to 180c to be operated under various operating systems.

Meanwhile, FIG. 3B illustrates an example in which a vehicle speed indicator 212a and a vehicle internal temperature indicator 213a are displayed on a first display 180a, a home screen 222 including a plurality of applications, a vehicle speed indicator 212b, and a vehicle internal temperature indicator 213b is displayed on a second display 180b, and a second home screen 222b including a plurality of applications and a vehicle internal temperature indicator 213c is displayed on a third display 180c.

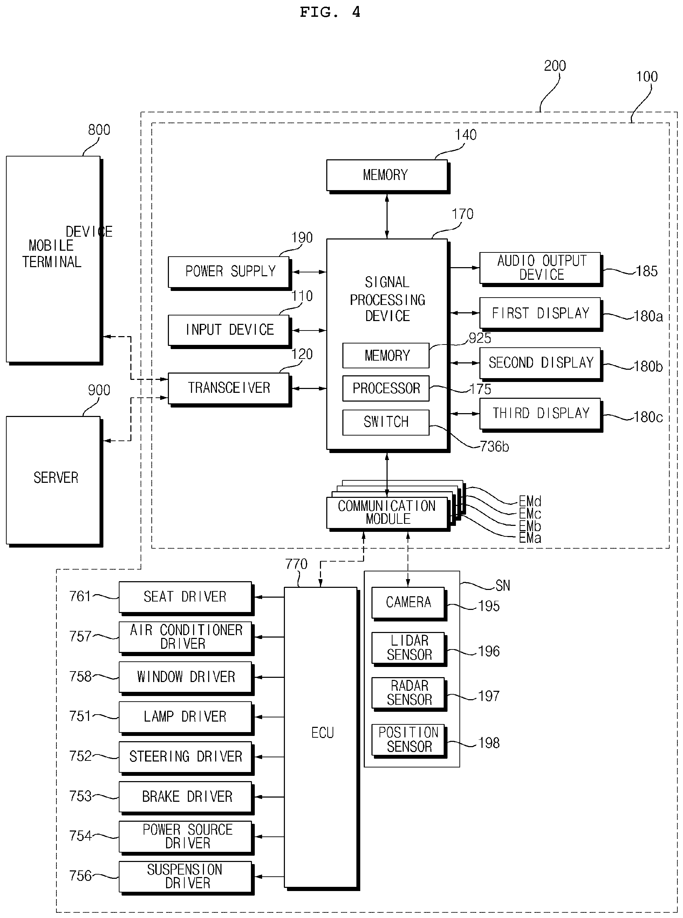

FIG. 4 is an exemplary internal block diagram of the vehicle of FIG. 1.

Referring to the figure, the vehicle 200 according to an embodiment of the present disclosure can include a lamp driver 751, a steering driver 752, a brake driver 753, a power source driver 754, a suspension driver 756, an air conditioner driver 757, a window driver 758, a seat driver 761, and the signal processing device 170.

Meanwhile, the vehicle 200 can further include an ECU 770, a plurality of sensor devices SN, and a plurality of communication modules EMa to EMd.

Meanwhile, the vehicle 200 according to an embodiment of the present disclosure can further include the vehicle display apparatus 100.

The vehicle display apparatus 100 according to an embodiment of the present disclosure can include an input device 110, a transceiver 120 for communication with an external device, a plurality of communication modules EMa to EMd for internal communication, a memory 140, the signal processing device 170, a plurality of displays 180a to 180c, an audio output device 185, and a power supply 190.

The plurality of communication modules EMa to EMd can be disposed in a plurality of zones Z1 to Z4, respectively, in FIG. 2.

Meanwhile, the signal processing device 170 can be provided therein with a communication switch 736b for data communication with the respective communication modules EM1 to EM4.

The respective communication modules EM1 to EM4 can perform data communication with the plurality of sensor devices SN or the ECU 770.

Meanwhile, a plurality of sensor devices SN can include a camera 195, a lidar sensor 196, a radar sensor 197, or a position sensor 198.

The input device 110 can include a physical button or pad for button input or touch input.

Meanwhile, the input device 110 can include a microphone (not shown) for user voice input.

The transceiver 120 can wirelessly exchange data with a mobile terminal 800 or a server 900.

In particular, the transceiver 120 can wirelessly exchange data with a mobile terminal of a vehicle driver. Any of various data communication schemes, such as Bluetooth, Wi-Fi, WIFI Direct, and APIX, can be used as a wireless data communication scheme.

The transceiver 120 can receive weather information and road traffic state information, such as Transport Protocol Experts Group (TPEG) information, from a mobile terminal 800 or a server 900. To this end, the transceiver 120 can include a mobile communication module (not shown).

Meanwhile, the transceiver 120 can wirelessly exchange data with a nearby vehicle.

For example, the transceiver 120 can wirelessly exchange a vehicle message with a nearby vehicle through Vehicle-to-everything (V2X) communication.

The plurality of communication modules EM1 to EM4 can receive sensor data and the like from the electronic control unit (ECU) 770 or the sensor device SN or a zonal signal processing device 170Z, and can transmit the received sensor data to the signal processing device 170.

Here, the sensor data can include at least one of vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, or vehicle internal humidity data.

The sensor data can be acquired from a heading sensor, a yaw sensor, a gyro sensor, a position sensor, a vehicle forward/backward movement sensor, a wheel sensor, a vehicle speed sensor, a car body inclination sensor, a battery sensor, a fuel sensor, a tire sensor, a steering-wheel-rotation-based steering sensor, a vehicle internal temperature sensor, or a vehicle internal humidity sensor.

Meanwhile, the position module can include a GPS module configured to receive GPS information or a position sensor 198.

Meanwhile, at least one of the plurality of communication modules EM1 to EM4 can transmit position information data sensed by the GPS module or the position sensor 198 to the signal processing device 170.

Meanwhile, at least one of the plurality of communication modules EM1 to EM4 can receive front image data of the vehicle, side-of-vehicle image data, rear image data of the vehicle, and obstacle-around-vehicle distance information from the camera 195, the lidar sensor 196, or the radar sensor 197, etc., and can transmit the received information to the signal processing device 170.

The memory 140 can store various data necessary for overall operation of the vehicle display apparatus 100, such as programs for processing or control of the signal processing device 170.

For example, the memory 140 can store data about the hypervisor and first to third virtual machines executed by the hypervisor in the processor 175.

The audio output device 185 can convert an electrical signal from the signal processing device 170 into an audio signal, and can output the audio signal. To this end, the audio output device 185 can include a speaker.

The power supply 190 can supply power necessary to operate components under control of the signal processing device 170. In particular, the power supply 190 can receive power from a battery in the vehicle.

The signal processing device 170 can control the overall operation of each device in the vehicle display apparatus 100 or the vehicle 200.

For example, the signal processing device 170 can include a processor 175 configured to perform signal processing for the vehicle displays 180a and 180b.

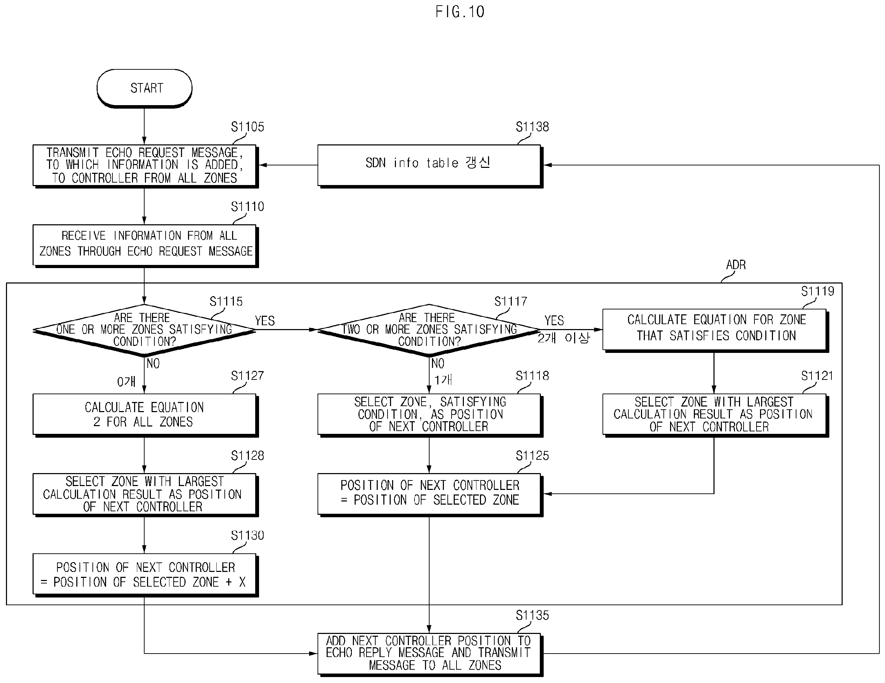

The processor 175 can execute the first to third virtual machines (not shown) on the hypervisor 505 (see FIG. 10) in the processor 175.

Among the first to third virtual machines (not shown) (see FIG. 10), the first virtual machine (not shown) can be called a server virtual machine, and the second and third virtual machines (not shown) and (not shown) can be called guest virtual machines.

For example, the first virtual machine (not shown) in the processor 175 can receive sensor data from the plurality of sensor devices, such as vehicle sensor data, position information data, camera image data, audio data, or touch input data, and can process and output the received sensor data.

As described above, the first virtual machine (not shown) can process most of the data, whereby 1:N data sharing can be achieved.

In another example, the first virtual machine (not shown) can directly receive and process CAN data, Ethernet data, audio data, radio data, USB data, and wireless communication data for the second and third virtual machines (not shown).

Further, the first virtual machine (not shown) can transmit the processed data to the second and third virtual machines (not shown).

Accordingly, only the first virtual machine (not shown), among the first to third virtual machines (not shown), can receive sensor data from the plurality of sensor devices, communication data, or external input data, and can perform signal processing, whereby load in signal processing by the other virtual machines can be reduced and 1:N data communication can be achieved, and therefore synchronization at the time of data sharing can be achieved.

Meanwhile, the first virtual machine (not shown) can be configured to write data in the shared memory 508, whereby the second virtual machine (not shown) and the third virtual machine (not shown) share the same data.

For example, the first virtual machine (not shown) can be configured to write vehicle sensor data, the position information data, the camera image data, or the touch input data in the shared memory 508, whereby the second virtual machine (not shown) and the third virtual machine (not shown) share the same data. Consequently, 1:N data sharing can be achieved.

Eventually, the first virtual machine (not shown) can process most of the data, whereby 1:N data sharing can be achieved.

Meanwhile, the first virtual machine (not shown) in the processor 175 can be configured to set the shared memory 508 based on the hypervisor 505 in order to transmit the same data to the second virtual machine (not shown) and the third virtual machine (not shown).

Meanwhile, the signal processing device 170 can process various signals, such as an audio signal, an image signal, and a data signal. To this end, the signal processing device 170 can be implemented in the form of a system on chip (SOC).

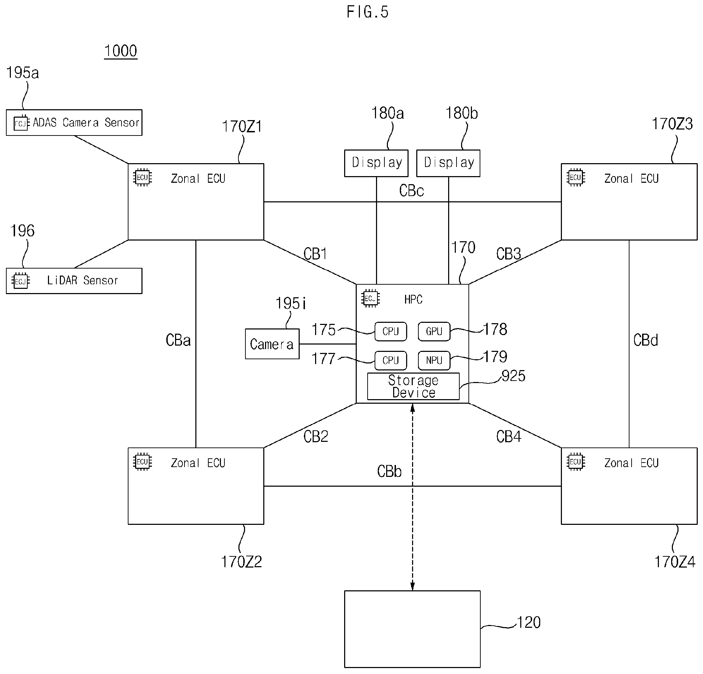

FIG. 5 is an exemplary block diagram of a vehicle control apparatus according to an embodiment of the present disclosure.

Referring to the figure, a vehicle control apparatus 1000 according to an embodiment of the present disclosure includes a signal processing device 170 and at least one zonal signal processing devices 170Z1 to 170Z4.

Meanwhile, the signal processing device 170 includes a signal processing device 170 including a central processor 175 and a storage device 925.

Meanwhile, the signal processing device 170 can further include at least one neural processor 179.

Meanwhile, the vehicle control apparatus 1000 according to an embodiment of the present disclosure can further include at least one display.

Meanwhile, the vehicle control apparatus 1000 according to an embodiment of the present disclosure can further include the steering driver 752, the brake driver 753, the power source driver 754, the ECU 770, or the plurality of sensor devices SN in FIG. 4.

Meanwhile, the vehicle control apparatus 1000 according to an embodiment of the present disclosure can further include the lamp driver 751, the suspension driver 756, the air conditioner driver 757, the window driver 758, the seat driver 761, or the plurality of communication modules EMa to EMd in FIG. 4.

In the drawing, a cluster display 180a and an audio video navigation (AVN) display 180b are illustrated as the at least one display.

In this case, the signal processing device 170 is a high-performance centralized signal processing and control device including a plurality of CPUs 175, GPUs 178, NPUs 179, etc., and can be referred to as a High Performance Computing (HPC) signal processing device or a central signal processing device.

The plurality of zonal signal processing devices 170Z1 to 170Z4 and the signal processing device 170 can be connected via wired cables CB1 to CB4.

Meanwhile, the plurality of zonal signal processing devices 170Z1 to 170Z4 can be connected via wired cables CBa to CBd.

In this case, the wired cables CBa to CBd can include CAN communication cable or Ethernet communication cable, or PCI Express cable.

Meanwhile, the storage device 925 may be a mass storage device 925.

Meanwhile, the signal processing device 170 according to an embodiment of the present disclosure can further include a graphic processor 178.

Meanwhile, the signal processing device 170 according to an embodiment of the present disclosure can include at least one central processor 175, 178, and 177.

Meanwhile, sensor data can be transmitted from at least one of the plurality of zonal signal processing devices 170Z1 to 170Z4 to the signal processing device 170. Particularly, the sensor data can be stored in the storage device 925 in the signal processing device 170.

In this case, the sensor data can include at least one of camera data, lidar data, radar data, vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data or vehicle internal humidity data.

In the drawing, an example is illustrated in which the camera data from the camera 195a and the lidar data from the lidar sensor 196 are input to a first zonal signal processing device 170Z1, and the camera data and the lidar data are transmitted to the signal processing device 170 via a second zonal signal processing device 170Z2 and a third zonal signal processing device 170Z3, and the like.

Meanwhile, data write speed or data read speed to write and read data to and from the storage device 925 is faster than a network speed when the sensor data is transmitted from at least one of the plurality of zonal signal processing devices 170Z1 to 170Z4 to the signal processing device 170, such that it is preferred to perform multi path routing so as to avoid bottlenecks in a network.

To this end, the signal processing device 170 according to an embodiment of the present disclosure can perform multi path routing based on Software Defined Network (SDN).

Accordingly, stable network environment for data write and read operations can be ensured. Further, data can be transmitted to the storage device 925 by using multiple paths, such that data can be transmitted by dynamically changing a network configuration.

It is desirable that data communication between the plurality of zonal signal processing devices 170Z1 to 170Z4 and the signal processing device 170 in the vehicle control apparatus 1000 according to an embodiment of the present disclosure is peripheral component interconnect express communication in order to provide high band and low delay communication.

Meanwhile, the signal processing device 170 according to an embodiment of the present disclosure can receive an image of the interior of the vehicle captured by an internal camera 195i, and may perform signal processing on the image of the interior.

Meanwhile, the signal processing device 170 according to an embodiment of the present disclosure can receive a front image of the vehicle captured by a front camera 195a, and may perform signal processing on the front image.

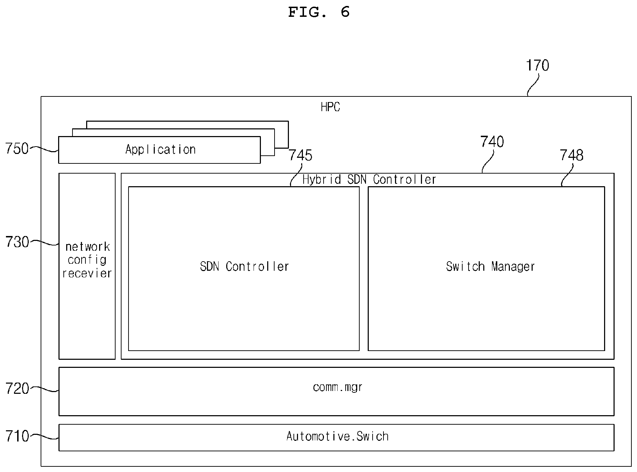

FIG. 6 is an exemplary internal block diagram of a signal processing device according to an embodiment of the present disclosure.

Referring to the figure, the signal processing device 170 according to an embodiment of the present disclosure exchanges data with at least one zonal signal processing device 170z.

Meanwhile, the signal processing device 170 includes a memory 925 configured to store an echo request message from the zonal signal processing device 170z, and a processor 175 configured to transmit an echo reply message corresponding to the echo request message.

Meanwhile, the processor 175 executes a network controller 740 for data exchange with at least one zonal signal processing device 170z.

In this case, the network controller 740 can be a hybrid network controller. For example, the network controller 740 can include or execute an SDN controller 745 and a switch manager 748.

Meanwhile, the processor 175 selects a candidate zonal signal processing device 170z for replacing the network controller 740 based on processor resource information, included in the echo request message, of the processor 175 in each zonal signal processing device 170z, and transmits an echo reply message including information regarding the selected candidate zonal signal processing device. Accordingly, in-vehicle networking can be stably provided. Further, in-vehicle networking can be rapidly provided in response to an abnormality in the signal processing device 170.

Meanwhile, the processor 175 may not transmit an echo reply message when the network controller 740 is abnormal.

For example, the processor 175 may not transmit an echo reply message when the network controller 740 is abnormal, and in response thereto, the network controller 740 can be replaced with the zonal signal processing device 170z if the echo reply message is not received within a predetermined period of time. Accordingly, in-vehicle networking can be stably provided.

Meanwhile, the processor 175 can transmit an echo reply message, including information regarding the selected candidate zonal signal processing device and network information access key information, to the selected zonal signal processing device 170z. Accordingly, in-vehicle networking can be stably provided.

Meanwhile, the processor 175 can execute at least one application 750.

In this case, the application 750 can be a streaming application such as an Over-the-top (OTT) media service, a camera application for camera data processing, a lidar application for lidar data processing, a radar application for radar data processing, or an Advanced Driver Assistance System (ADAS) application or a vehicle autonomous driving application, etc.

Meanwhile, the processor 175 can execute a network configuration interface 730 configured to receive a network configuration request from the application 750 and transmit network configuration data to the application 750. Accordingly, in-vehicle networking can be stably provided.

Meanwhile, the network configuration interface 730 can be connected to the network controller 740 and the application 750 executed in the processor 175, and can be connected to the application 750 and a network controller 745z in the selected candidate zonal signal processing device 170z after operation of the network controller 740 stops. Accordingly, in-vehicle networking can be stably provided.

Meanwhile, the processor 175 can execute a network switch 710 and a communication manager 720. Accordingly, in-vehicle networking can be stably provided.

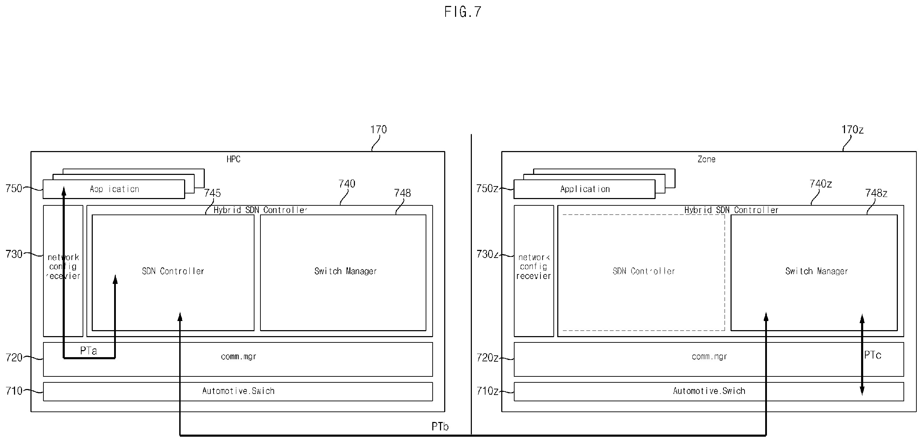

FIGS. 7 to 9G are diagrams referred to in the description of FIG. 6.

First, FIG. 7 illustrates an example of operation of the vehicle control apparatus 1000 according to an embodiment of the present disclosure.

Referring to the figure, the vehicle control apparatus 1000 according to an embodiment of the present disclosure includes a central signal processing device 170 and at least one zonal signal processing device 170z.

Meanwhile, the central signal processing device 170 includes a memory 925 configured to store an echo request message from the zonal signal processing device 170z, and a processor 175 configured to transmit an echo reply message corresponding to the echo request message.

Meanwhile, the processor 175 in the central signal processing device 170 can execute a network controller 740, a network switch 710, and a communication manager 720.

Meanwhile, the processor 175 in the central signal processing device 170 can execute the network controller 740, the network switch 710, the communication manager 720, the network configuration interface 730, and the application 750.

Meanwhile, a processor 175z in the zonal signal processing device 170z can execute a network controller 740z, a network switch 710z, a communication manager 720z, a network configuration interface 730z, and an application 750z.

Meanwhile, the processor 175 in the central signal processing device 170 can execute both the SDN controller 745 and the switch manager 748, which are included in the network controller 740, in a normal mode.

Meanwhile, of an SDN controller 745z and a switch manager 748z included in the network controller 740z, the processor 175z in the zonal signal processing device 170z can execute only the switch manager 748z in the normal mode.

Meanwhile, the application 750 in the central signal processing device 170 can transmit a request for network configuration information PTa to the SDN controller 745 in the network controller 740.

In response thereto, the SDN controller 745 in the network controller 740 can transmit the network configuration information PTa to the application 750.

Meanwhile, the SDN controller 745 in the network controller 740 of the central signal processing device 170 can transmit a request for switch setting information PTb to the switch manager 748z in the network controller 740z of the zonal signal processing device 170z.

In response thereto, the switch manager 748z in the network controller 740z of the zonal signal processing device 170z can transmit the switch setting information PTb to the SDN controller 745 in the network controller 740 of the central signal processing device 170.

Meanwhile, the switch manager 748z in the network controller 740z of the zonal signal processing device 170z can transmit a request for network switch setting information PTc to the network switch 710z.

In response thereto, the network switch 710z can transmit the network switch setting information PTc to the switch manager 748z in the network controller 740z.

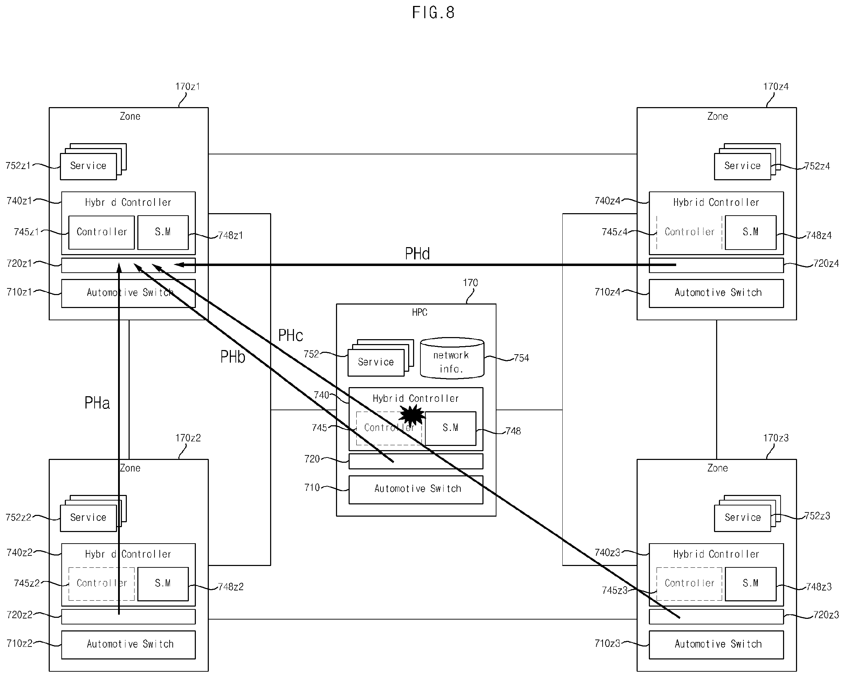

Next, FIG. 8 illustrates another example of operation of the vehicle control apparatus 1000 according to an embodiment of the present disclosure.

Referring to the figure, the vehicle control apparatus 1000 according to an embodiment of the present disclosure includes a central signal processing device 170 and a plurality of zonal signal processing devices 170z1 to 170z4.

Meanwhile, the central signal processing device 170 includes a memory 925 configured to store an echo request message from the plurality of zonal signal processing devices 170z1 to 170z4, and a processor 175 configured to transmit an echo reply message corresponding to the echo request message.

Meanwhile, the processor 175 in the central signal processing device 170 can execute a network controller 740, a network switch 710, and a communication manager 720.

Meanwhile, the processor 175 in the central signal processing device 170 can execute the network controller 740, the network switch 710, the communication manager 720, a service 752, etc., and can execute or store network information 754 and the like.

In this case, the service 752 can correspond to the application 750 of FIG. 6 or FIG. 7.

Meanwhile, the respective processors 175z1 to 175z4 in the plurality of zonal signal processing devices 170z1 to 170z4 can execute network controllers 740z1 to 740z4, network switches 710z1 to 710z4, communication managers 720z1 to 720z4, and services 752z1 to 752z4 corresponding to the application 750z.

Meanwhile, during the initial operation of the vehicle control apparatus 1000 according to an embodiment of the present disclosure, the communication manager 720 of the central signal processing device 170 and the communication managers 720z1 to 720z4 of the plurality of zonal signal processing devices 170z1 to 170z4 are all connected for rapid communication.

Meanwhile, the network controller 740 in the central signal processing device 170 is connected to the communication manager 720 provided therein.

Meanwhile, the network controllers 740z1 to 740z4 in the plurality of zonal signal processing devices 170z1 to 170z4 are connected to the communication managers 720z1 to 720z4.

Then, each of the communication managers 720z1 to 720z4 in the plurality of zonal signal processing devices 170z1 to 170z4 starts to communicate with the communication manager 720 in the central signal processing device 170.

Meanwhile, communication is performed in the order of switch managers 748z1 to 748z4 in the network controllers 740z1 to 740z4 of the plurality of zonal signal processing devices 170z1 to 170z4, the communication managers 720z1 to 720z4 in the plurality of zonal signal processing devices 170z1 to 170z4, the communication manager 720 in the central signal processing device 170, and the network controller 740 in the central signal processing device 170, and Software Defined Network (SDN) operations can be performed. For example, SDN-based routing can be performed.

In the drawing, an example is illustrated in which an abnormality or default occurs in the network controller 740 of the central signal processing device 170.

Specifically, it is illustrated that an abnormality or default occurs in the SDN controller 745 in the network controller 740 of the central signal processing device 170.

Meanwhile, in response to an abnormality in the network controller 740 of the central signal processing device 170, the communication managers 720z1 to 720z4 in the plurality of zonal signal processing devices 170z1 to 170z4 can ascertain that the network controller 740 in the central signal processing device 170 is disconnected from the communication manager 720.

Then, when the network controller 740 in the central signal processing device 170 is disconnected from the communication manager 720, an SDN controller 745z1 in the network controller 740z1 of a first zonal signal processing device 170z1, which is selected as a next network controller can be activated, and connection between the SDN controller 745z1 and the communication manager 720z1 can be activated.

Next, the communication manager 720z1 in the first zonal signal processing device 170z1 can reset the locations of the communication manager 720 in the central signal processing device 170 and communication managers 720z2 to 720z4 in second to fourth zonal signal processing devices 170z2 to 170z4 or can prepare for communication therebetween.

Meanwhile, after completing preparation for communication with the communication manager 720 in the central signal processing device 170 and the communication managers 720z2 to 720z4 in second to fourth zonal signal processing devices 170z2 to 170z4, the communication manager 720z1 in the first zonal signal processing device 170z1 can receive messages PHb, PHa, PHc, and PHd respectively from the communication manager 720 in the central signal processing device 170 and the communication managers 720z2 to 720z4 in the second to fourth zonal signal processing devices 170z2 to 170z4.

Meanwhile, the SDN-based routing can be performed based on the network controller 740z1 in the first zonal signal processing device 170z1.

Meanwhile, the processor 175 in the central signal processing device 170 can transmit a first echo reply message, including information regarding the selected candidate zonal signal processing device and network information access key information, to the selected first zonal signal processing device 170z1, and transmit a second echo reply message, including information regarding the selected candidate zonal signal processing device 170z, to the unselected zonal signal processing devices 170z2 to 170z4, in which a size of the first echo reply message can be different from a size of the second echo reply message. Accordingly, in-vehicle networking can be stably provided.

For example, the size of the first echo reply message can be greater than the size of the second echo reply message.

In another example, the size of the first echo reply message can be smaller than the size of the second echo reply message.

Meanwhile, in response to receiving the echo request message, the processor 175 in the central signal processing device 170 can select a candidate zonal signal processing device 170z and transmit the echo reply message corresponding to the echo request message. Accordingly, in-vehicle networking can be stably provided.

Meanwhile, in the case in which the network controller 740 in the central signal processing device 170 is replaced while executing the network switch 710z1 and the communication manager 720z1, the first zonal signal processing device 170z1 can activate the SDN controller 745z1 in the network controller 740z1. Accordingly, in-vehicle networking can be stably provided.

Meanwhile, the first zonal signal processing device 170z1 can transmit an echo request message, including resource information of the processor 175z1, to the central signal processing device 170, and can receive an echo reply message, including information regarding the selected candidate zonal signal processing device, from the central signal processing device 170. Accordingly, in-vehicle networking can be stably provided.

Meanwhile, the first zonal signal processing device 170z1 can transmit an echo request message, including resource information of the processor 175z1, to the central signal processing device 170, and in response to not receiving a subsequent echo reply message after receiving a first echo reply message, including information regarding the selected candidate zonal signal processing device and network information access key information, from the central signal processing device 170, the first zonal signal processing device 170z1 can activate at least a portion of the network controller 740z1 for operation. Accordingly, in-vehicle networking can be stably provided.

Specifically, the first zonal signal processing device 170z1 can transmit an echo request message, including resource information of the processor 175z1, to the central signal processing device 170, and in response to not receiving a subsequent echo reply message after receiving a first echo reply message, including information regarding the selected candidate zonal signal processing device and network information access key information, from the central signal processing device 170, the first zonal signal processing device 170z1 can activate the SDN controller 745z1 in the network controller 740z1 for operation. Accordingly, in-vehicle networking can be stably provided.

Meanwhile, the processor 175 in the central signal processing device 170 can receive the echo request message from at least one zonal signal processing device 170z, and can select a next network controller for replacing the network controller 740 based on the processor resource information, included in the echo request message, of the processor 175 in each zonal signal processing device 170z.

For example, when selecting a next network controller, the processor 175 in the central signal processing device 170 can select a candidate zonal signal processing device from among the plurality of zonal signal processing devices and transmit an echo reply message including information regarding the selected candidate zonal signal processing device. Accordingly, in-vehicle networking can be stably provided.

Meanwhile, the processor 175 in the central signal processing device 170 can transmit an echo reply message, including the information regarding the selected candidate zonal signal processing device and the network information access key information, to the selected first zonal signal processing device 170z1. Accordingly, in-vehicle networking can be stably provided.

Meanwhile, the processor 175 in the central signal processing device 170 can transmit a first echo reply message, including the information regarding the selected candidate zonal signal processing device and the network information access key information, to the selected first zonal signal processing device 170z1.

Meanwhile, the processor 175 in the central signal processing device 170 can transmit a second echo reply message, including information regarding the selected candidate zonal signal processing device 170z, to the unselected zonal signal processing device 170z.

In this case, the size of the first echo reply message can be different from the size of the second echo reply message.

Meanwhile, the processor 175 in the central signal processing device 170 can execute the application 750 and execute the network configuration interface 730 configured to receive a network configuration request from the application 750 and to transmit the network configuration data to the application 750. Accordingly, in-vehicle networking can be stably provided.

Meanwhile, the network configuration interface 730 in the processor 175 of the central signal processing device 170 can be connected to the application 750 and the network controller 740 in the central signal processing device 170, and can be connected to the application 750 and the network controller 745z in the selected candidate zonal signal processing device 170z after operation of the network controller 740 in the central signal processing device 170 stops. Accordingly, in-vehicle networking can be stably provided.

Meanwhile, the processor 175 in the central signal processing device 170 can select a subsequent network controller in response to receiving the echo request message.

That is, the processor 175 in the central signal processing device 170 can select a candidate zonal signal processing device 170z corresponding to a subsequent network controller, and can transmit an echo reply message corresponding to the echo request message. Accordingly, in-vehicle networking can be stably provided.

Meanwhile, when the network controller 740 is abnormal, the processor 175 in the central signal processing device 170 may not transmit an echo reply message.

For example, when the network controller 740 is abnormal, the processor 175 may not transmit an echo reply message, and in response thereto, the network controller 740 can be replaced with the zonal signal processing device 170z if the echo reply message is not received within a predetermined period of time. Accordingly, in-vehicle networking can be stably provided.

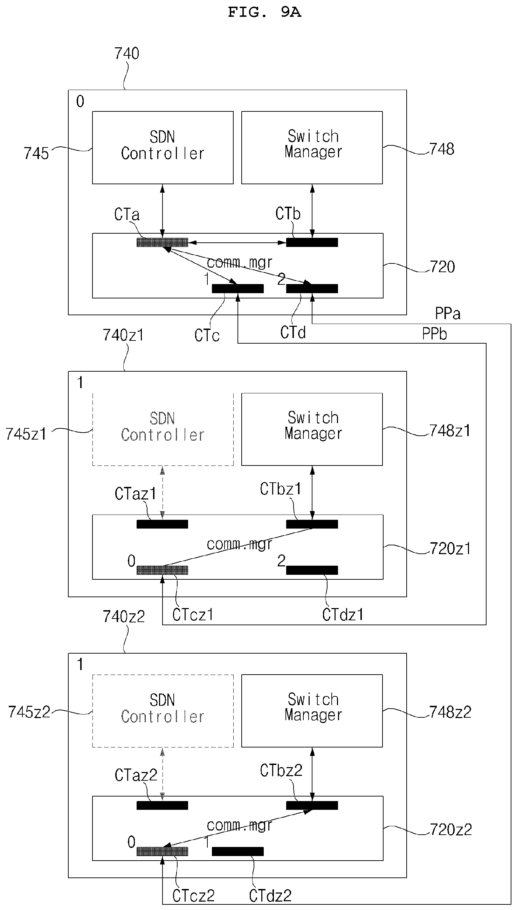

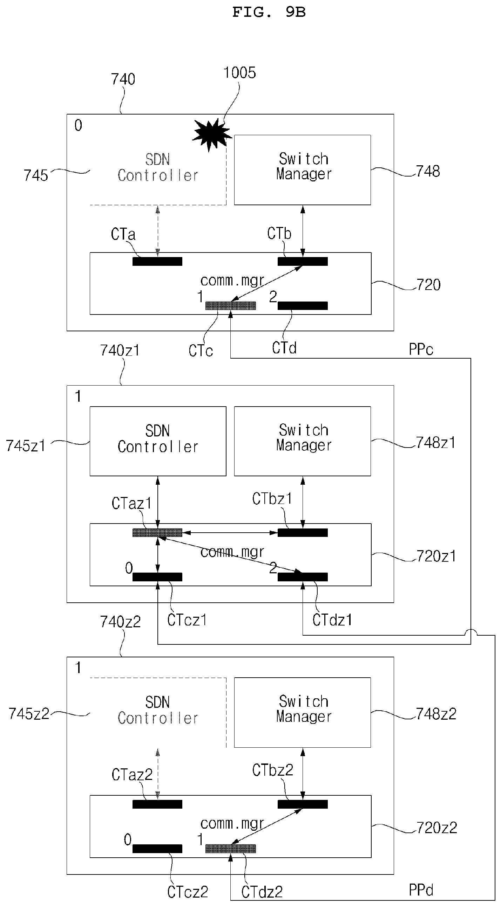

FIGS. 9A and 9B are diagrams illustrating an example of a pre-connection operation of a communication manager.

FIG. 9A is a diagram illustrating an example in which the SDN controller 745 in the network controller 740 of the central signal processing device 170 is in a normal operation state or a default state.

Referring to the figure, if the SDN controller 745 in the network controller 740 of the central signal processing device 170 is in a normal operation state or a default state, the SDN controller 745 in the network controller 740 of the central signal processing device 170 can be connected to the communication managers 720z1 and 720z2 in the plurality of zonal signal processing devices 170z1 and 170z2 by the communication manager 720.

For example, the communication manager 720 in the central signal processing device 170 can connect a first port CTa to the SDN controller 745, connect a second port CTb to the switch manager 748, and connect the first port CTa to each of a third port CTc and a fourth port CTd in the communication manager 720.

Meanwhile, the communication manager 720 in the central signal processing device 170 can connect the third port CTc to a third port CTcz1 in the communication manager 720z1 of the first zonal signal processing device 170z1 and connect the fourth port CTd to a third port CTcz2 in the communication manager 720z2 of the second zonal signal processing device 170z2.

That is, the communication manager 720 in the central signal processing device 170 can be connected to the communication manager 720z1 in the first zonal signal processing device 170z1 through the third port CTc, and can be connected to the communication manager 720z2 in the second zonal signal processing device 170z2 through the fourth port CTd.

Meanwhile, the third port CTcz1 in the communication manager 720z1 of the first zonal signal processing device 170z1 can be connected to the second port CTbz1 to be connected to the switch manager 748z1.

Meanwhile, the third port CTcz2 in the communication manager 720z2 of the second zonal signal processing device 170z2 can be connected to the second port CTbz2 to be connected to the switch manager 748z2.

FIG. 9B is a diagram illustrating an example in which the SDN controller 745 in the network controller 740 of the central signal processing device 170 is in an abnormal state.

Referring to the figure, if the SDN controller 745 in the network controller 740 of the central signal processing device 170 is in an abnormal state, the switch manager 748 in the network controller 740 of the central signal processing device 170 can be connected to the communication manager 720z1 of the first zonal signal processing device 170z1 by the communication manager 720.

Meanwhile, if the SDN controller 745 in the network controller 740 of the central signal processing device 170 is in an abnormal state, the SDN controller 745z1 in the network controller 740z1 of the first zonal signal processing device 170z1 can be activated.

For example, in response to not receiving an echo reply message within a predetermined period of time from the network controller 740 in the central processing device 170, the communication manager 720z1 in the first zonal signal processing device 170z1 can transmit an activation signal to the SDN controller 745z1 in the network controller 740z1 of the first zonal signal processing device 170z1.

Meanwhile, the SDN controller 745z1 in the network controller 740z1 of the first zonal signal processing device 170z1 can be activated based on the activation signal.

Meanwhile, the communication manager 720z1 in the first zonal signal processing device 170z1 can connect a first port CTaz1 to the SDN controller 745z1, connect a second port CTbz1 to the switch manager 748z1, and connect the first port CTaz1 to each of a third port CTcz1 and a fourth port CTdz1.

Meanwhile, the communication manager 720z1 in the first zonal signal processing device 170z1 can connect the third port CTcz1 to the third port CTc in the communication manager 720 of the central signal processing device 170 and connect the fourth port CTdz1 in the communication manager 720z1 of the first zonal signal processing device 170z1 to a fourth port CTdz2 in the communication manager 720z2 of the second zonal signal processing device 170z2.

That is, the communication manager 720z1 in the first zonal signal processing device 170z1 can be connected to the communication manager 720 in the central signal processing device 170 through the third port CTcz1, and can be connected to the communication manager 720z2 in the second zonal signal processing device 170z2 through the fourth port CTdz1.

Meanwhile, the third port CTc in the communication manager 720 of the central signal processing device 170 can be connected to the second port CTb to be connected to the switch manager 748.

Meanwhile, the fourth port CTdz2 in the communication manager 720z2 of the second zonal signal processing device 170z2 can be connected to the second port CTbz2 to be connected to the switch manager 748z2.

Meanwhile, the SDN controller 745 and the switch manager 748 in the central signal processing device 170 can transmit messages to the communication manager 720 regardless of destinations of messages.

Meanwhile, the SDN controller 745z1 and the switch managers 748z1 and 748z2 in the plurality of zonal signal processing devices 170z1 and 170z2 can transmit messages to the communication managers 720z1 and 720z2 regardless of destinations of messages.

Meanwhile, information, such as the position of a network controller to be operated in response to an abnormal state or a default state, network information access key, and the like can be stored in an SDN information table in each of the communication managers 720, 720z1, and 720z2.

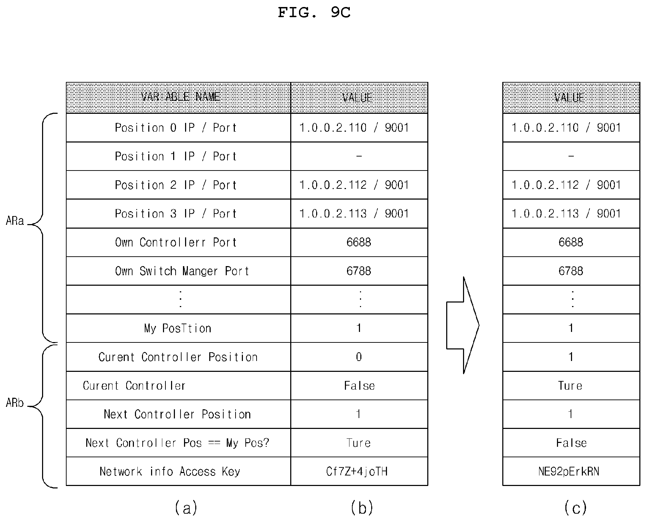

FIG. 9C is a diagram illustrating an example of an SDN information table.

Referring to FIG. 9C, the SDN information table can be stored in each of the communication managers 720, 720z1, and 720z2 of the central signal processing device 170 and the plurality of zonal signal processing devices 170z1 and 170z2.

The SDN information table can include a fixed region ARa in which values are fixed, and a variable region ARb in which values are variable.

Meanwhile, the fixed region ARa can include port information regarding a plurality of ports, controller port information, switch manager port information, resource identifier, and location information.

Meanwhile, the variable region ARb can include current controller position information, next network controller position information, and network information access key information.

Meanwhile, in response to a change from the SDN controller 745 in the central signal processing device 170 to the SDN controller 745z1 in the network controller 740z1 of the first zonal signal processing device 170z1 and the like, the value in the variable region ARb can be changed.

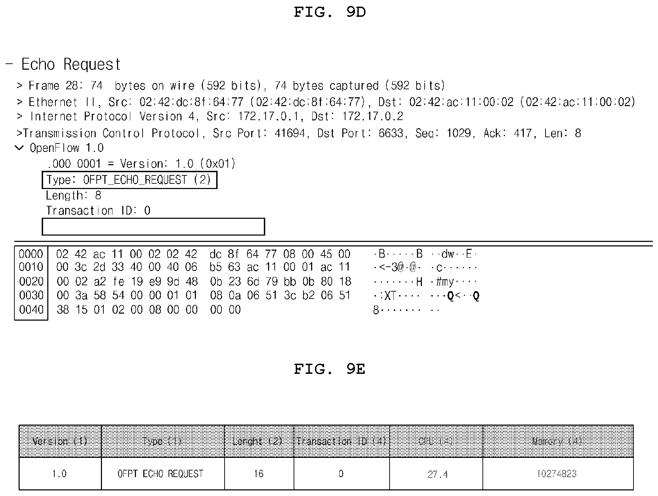

FIG. 9D is a diagram illustrating an echo request message.

Referring to the figure, the echo request message can include type information.

FIG. 9E is a diagram illustrating an example of the echo request message of FIG. 9D.

Referring to the figure, the echo request message can include a payload.

The echo request message can be transmitted from the switch managers 748z1 to 748z4 of the respective zonal signal processing devices 170z1 to 170z4 to the network controller 740 in the central signal processing device 170.

The echo request message can include version information, type information, length information, ID information, processor utilization information, and memory capacity information.

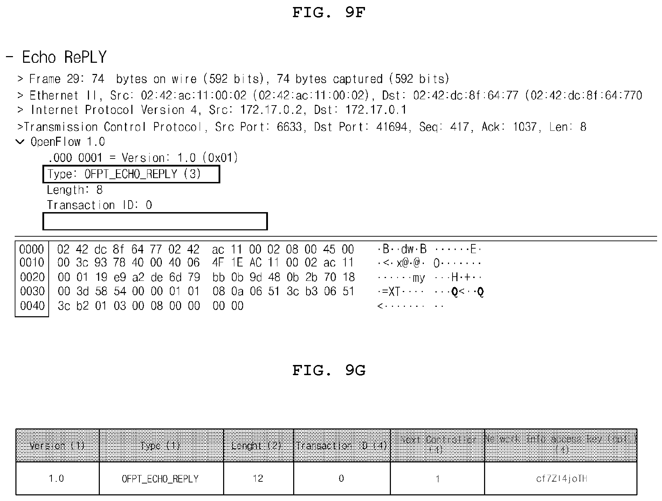

FIG. 9F illustrates an echo reply message.

Referring to the figure, the echo reply message may include type information.

FIG. 9G illustrates an example of the echo reply message of FIG. 9F.

Referring to the figure, the echo reply message can include a payload.

The echo reply message can be transmitted from the SD controller 745 in the network controller 740 of the central signal processing device 170 to the switch managers 748z1 to 748z4 of the respective zonal signal processing devices 170z1 to 170z4.

The echo reply message can include version information, type information, length information, ID information, subsequent network controller information, and network information access key information.

Meanwhile, the subsequent network controller information can include information regarding the selected candidate zonal signal processing device.

FIG. 10 is a flowchart illustrating an example of operation of a vehicle control apparatus according to an embodiment of the present disclosure.

Referring to the figure, the switch managers 748z1 to 748z4 in the zonal signal processing devices 170z1 to 170z4 of the vehicle control apparatus 1000 according to an embodiment of the present disclosure transmits an echo request message (S1105).

Particularly, the switch managers 748z1 to 748z4 in the plurality of zonal signal processing devices 170z1 to 170z4 can transmit an echo request message, including available capacity information of the processors 175z1 to 175z4 and available capacity information of the memories 925z1 to 925z4, to the central signal processing device 170.

Then, the SDN controller 745 in the network controller 740 of the central signal processing device 170 receives the echo request message from the respective zonal signal processing devices 170z1 to 170z4 (S1110).

Meanwhile, the SDN controller 745 in the network controller 740 of the central signal processing device 170 can extract the available capacity information of the processor and the available capacity information of the memory in the echo request message.

Meanwhile, the SDN controller 745 in the network controller 740 of the central signal processing device 170 can determine whether there are one or more zonal signal processing devices in which the available capacity information of the processor exceeds a first reference value and the available capacity information of the memory exceeds a second reference value (S1115).

In this case, the first reference value corresponds to a minimum available capacity of the processor for operating the SDN controller 745 in the zonal signal processing device 170z, and the second reference value corresponds to a minimum available capacity of the memory for operating the SDN controller 745z in the zonal signal processing device 170z.

Meanwhile, if there are one or more zonal signal processing devices in which the available capacity information of the processor exceeds the first reference value and the available capacity information of the memory exceeds the second reference value, the SDN controller 745 in the network controller 740 of the central signal processing device 170 can determine whether there are two or more zonal signal processing devices in which the available capacity information of the memory exceeds the second reference value (S1117).

Meanwhile, if the number of zonal signal processing devices, in which the available capacity information of the processor exceeds the first reference value and the available capacity information of the memory exceeds the second reference value, is not two or more, i.e., there is one zonal signal processing device in operation 1117 (S1117), the SDN controller 745 in the network controller 740 of the central signal processing device 170 can select a zonal signal processing device, satisfying the condition, as a signal processing device in which a next network controller is located (S1118).

Meanwhile, if there are two or more zonal signal processing devices in which the available capacity information of the processor exceeds the first reference value and the available capacity information of the memory exceeds the second reference value in operation 1117 (S1117), the SDN controller 745 in the network controller 740 of the central signal processing device 170 can calculate the following Equation 1 (S1119). [Equation 1] $RST = \left(Zc-Cc\right) 2 + \left(Zm-Cm\right) 2 ,$
wherein Zc denotes the available capacity information of the processor, Cc denotes the first reference value, Zm denotes the available capacity information of the memory, Cm denotes the second reference value, and RST denotes a calculation result.

Meanwhile, the SDN controller 745 in the network controller 740 of the central signal processing device 170 can compare the calculation results RST of Equation 1 for each of the zonal signal processing devices 170z1 to 170z4 which are two or more in number, and can select a zonal signal processing device with a largest calculation result as a signal processing device in which the next network controller is located (S1121).

Upon selecting the position of the next network controller in operations S1118 and S1121, the SDN controller 745 in the network controller 740 of the central signal processing device 170 can select the corresponding zonal signal processing device as the position of the next network controller (S1125).

Meanwhile, if there is no zonal signal processing device in which the available capacity information of the processor exceeds the first reference value and the available capacity information of the memory exceeds the second reference value in operation 1115 (S1115), the SDN controller 745 in the network controller 740 of the central signal processing device 170 can calculate the following Equation 2 (S1127). [Equation 2] $RSB = \left(Zc-Cc\right) + \left(Zm-Cm\right)$

Meanwhile, the SDN controller 745 in the network controller 740 of the central signal processing device 170 can compare the calculation results RSB of Equation 2 for each of the zonal signal processing devices 170z1 to 170z4, and can select a zonal signal processing device with a largest calculation result as a signal processing device in which the next network controller is located (S1128).

Upon selecting the position of the next network controller in operation 1128 (S1128), the SDN controller 745 in the network controller 740 of the central signal processing device 170 can set the position of the next network controller by adding arbitrary constant X to the corresponding zonal signal processing device (S1130).

In this case, the arbitrary constant X is a value which is much greater than the number of zonal signal processing devices, and can correspond to a resource shortage identifier in the fixed region ARa in the SDN information table of FIG. 9C.

Meanwhile, at the operation time of the next network controller, if a difference between the position of the next network controller and the position of the zonal signal processing device corresponds to the arbitrary constant X, it is desirable to secure available resources of the corresponding zonal signal processing device.

Then, the SDN controller 745 in the network controller 740 of the central signal processing device 170 can add the position information of the next network controller to the echo reply message and transmit the message to all the zonal signal processing devices 170z1 to 170z4 (S1135).

Next, the SDN controller 745 in the network controller 740 of the central signal processing device 170 updates the SDN information table of FIG. 9C (S1138).

Then, the processor 175 in the central signal processing device 170 can perform operation 1105 (S1105) again.

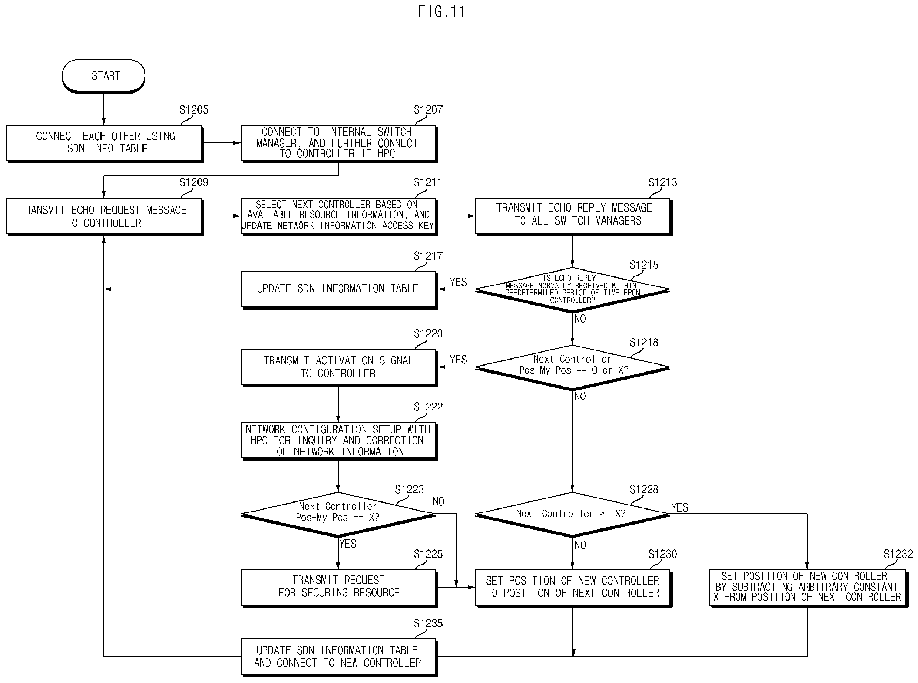

FIG. 11 is a flowchart illustrating another example of operation of a vehicle control apparatus according to an embodiment of the present disclosure.

Referring to the figure, the communication manager 720 in the central signal processing device 170 and the communication managers 720z1 to 720z4 in the zonal signal processing devices 170z1 to 170z4 are connected to each other based on the SDN information table of FIG. 9C (S1205).

Then, the communication managers 720z1 to 720z4 in the zonal signal processing devices 170z1 to 170z4 are connected to the switch managers 748z1 to 748z4, and the communication manager 720 in the central signal processing device 170 is connected to the SDN controller 745 in the network controller 740 (S1207).

Next, the switch managers 748z1 to 748z4 in the zonal signal processing devices 170z1 to 170z4 respectively transmits an echo request message to the SDN controller 745 in the network controller 740 (S1209).

Then, the SDN controller 745 in the network controller 740 of the central signal processing device 170 selects a next network controller based on the available resource information, and updates the network information access key (S1211).

Next, the SDN controller 745 in the network controller 740 of the central signal processing device 170 transmits an echo reply message to the communication managers 720z1 to 720z4 in all the zonal signal processing devices 170z1 to 170z4 (S1213).

In this case, the SDN controller 745 in the network controller 740 of the processor 175 in the central signal processing device 170 can transmit an echo reply message, including information regarding the selected candidate zonal signal processing device 170z and the network information access key, to the selected first zonal signal processing device 170z.

Meanwhile, the communication managers 720z1 to 720z4 in the zonal signal processing devices 170z1 to 170z4 is configured to determine whether an echo reply message is received within a predetermined period of time from the network controller 740 of the processor 175 in the central signal processing device 170 (S1215), and if so, configured to update the SDN information table of FIG. 9C (S1217).

Meanwhile, in response to not receiving the echo reply message within a predetermined period of time from the network controller 740 in the processor 175 of the central signal processing device 170 in operation 1215 (S1215), the communication managers 720z1 to 720z4 in the zonal signal processing devices 170z1 to 170z4 can be configured to determine whether a difference between the position of a next network controller and my position corresponds to zero (0) or the arbitrary constant X (S1218), and if so, configured to transmit an activation signal to the SDN controller 745z1 in the network controller 740z1 of the processor 175z1 in the first zonal signal processing device 170z1 which is selected as the next network controller (S1220).

That is, in response to not receiving the echo reply message within a predetermined period of time from the network controller 740 in the processor 175 of the central signal processing device 170, the communication managers 720z1 to 720z4 in the zonal signal processing devices 170z1 to 170z4 can be configured to determine that the network controller 740 in the processor 175 is in an abnormal state.

In this case, the communication manager 720z1 in the first zonal signal processing device 170z1 which is selected as the next network controller can be configured to transmit the activation signal to the SDN controller 745z1 in the network controller 740z1.

Meanwhile, the SDN controller 745z1 in the network controller 740z1 of the processor 175z1 in the first zonal signal processing device 170z1 can be activated based on the activation signal.

Then, the activated SDN controller 745z1 in the network controller 740z1 of the processor 175z1 in the first zonal signal processing device 170z1 can request network configuration for inquiry and correction of network information (S1222).

Next, the SDN controller 745z1 in the network controller 740z1 of the processor 175z1 in the first zonal signal processing device 170z1 can be configured to determine whether the difference between the position of the next network controller and my position corresponds to the arbitrary constant X (S1223,) and if so, configured to transmit a request for securing resources (S1225).

Meanwhile, if the difference between the position of the network controller and my position does not correspond to zero (0) or the arbitrary constant X in operation 1218 (S1218), at least one of the communication managers 720z1 to 720z4 in the zonal signal processing devices 170z1 to 170z4 can be configured to determine whether the position of the next network controller is greater than the arbitrary constant X (S1228), and if the position is not greater than the arbitrary constant X, configured to set the position of a new network controller to the position of the next network controller (S1230).

Meanwhile, if the position of the next network controller is greater than the arbitrary constant X in operation 1228 (S1228), at least one of the communication managers 720z1 to 720z4 in the zonal signal processing devices 170z1 to 170z4 can be configured to set the position of the new controller by subtracting the arbitrary constant X from the position of the next network controller (S1232).

Then, the communication managers 720z1 to 720z4 in the zonal signal processing devices 170z1 to 170z4 can be configured to update the SDN information table and perform connection to the new network controller (S1236).

Next, the communication managers 720z1 to 720z4 in the zonal signal processing devices 170z1 to 170z4 can be configured to transmit an echo request message to the new network controller 740z1, as in operation 1209 (S1209).

Referring to FIGS. 6 to 11, a streaming application, such as an Over-the-top media service (OTT), is executed by the processor 175 in the central signal processing device 170, such that data is transmitted to at least one zonal signal processing device through the SDN controller 745 in the network controller 740 of the processor 175, and then, in response to an abnormality in the SDN controller 745, the SDN controller 745z, which is preset as a next network controller, in the zonal signal processing device can be activated. Accordingly, in response to an abnormality in the network controller, a substitute network controller in a candidate region that replaces the abnormal network controller operates, such that in-vehicle networking can be stably provided.

Similarly, an application, such as a camera application for camera data processing, a lidar application for lidar data processing, a radar application for radar data processing, or an Advanced Driver Assistance System (ADAS) application or a vehicle autonomous driving application, etc., is executed by the processor 175 in the central signal processing device 170, such that data is transmitted to at least one zonal signal processing device through the SDN controller 745 in the network controller 740 of the processor 175, and then, in response to an abnormality in the SDN controller 745, the SDN controller 745z, which is preset as a next network controller, in the zonal signal processing device can be activated. Accordingly, in-vehicle networking can be stably provided.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device configured to exchange data with at least one zonal signal processing device, the signal processing device comprising:
a memory configured to store an echo request message from the zonal signal processing device; and
a processor configured to transmit an echo reply message corresponding to the echo request message,
wherein the processor is configured to execute a network controller, select a candidate zonal signal processing device for replacing the network controller based on processor resource information, included in the echo request message, of a processor in each zonal signal processing device, and transmit the echo reply message including information regarding the selected candidate zonal signal processing device.

2. The signal processing device of claim 1, wherein the processor is configured to transmit an echo reply message, including information regarding the selected candidate zonal signal processing device and network information access key information, to the selected zonal signal processing device.

3. The signal processing device of claim 1, wherein the processor is configured to:
transmit a first echo reply message, including information regarding the selected candidate zonal signal processing device and network information access key information, to the selected zonal signal processing device, and
transmit a second echo reply message, including information regarding the selected candidate zonal signal processing device, to an unselected zonal signal processing device,
wherein a size of the first echo reply message is different from a size of the second echo reply message.

4. The signal processing device of claim 1, wherein the processor is configured to execute an application, and execute a network configuration interface configured to receive a network configuration request from the application and transmit network configuration data to the application.

5. The signal processing device of claim 4, wherein the network configuration interface is connected to the application and the network controller executed in the processor, and
wherein after operation of the network controller stops, the network configuration interface is connected to the application and a network controller in the selected candidate zonal signal processing device.

6. The signal processing device of claim 1, wherein in response to receiving the echo request message, the processor is configured to select the candidate zonal signal processing device and transmit the echo reply message corresponding to the echo request message.

7. The signal processing device of claim 1, wherein in response to an abnormality in the network controller, the processor is configured not to transmit the echo reply message.

8. The signal processing device of claim 1, wherein the processor is configured to execute a network switch and a communication manager,
wherein the communication manager is configured to:
connect a first port to a Software Defined Network (SDN) controller,
connect a second port to the network switch,
connect the first port to a third port and a fourth port,
wherein the communication manager is connected to a communication manager in a first zonal signal processing device through the third port and connected to a communication manager in a second zonal signal processing device through the fourth port.

9. A vehicle control apparatus comprising:
a central signal processing device including a processor configured to execute a network controller, a network switch, and a communication manager; and
at least one zonal signal processing device,
wherein in response to an abnormality in the network controller, a first zonal signal processing device is configured to replace the network controller of the central signal processing device.

10. The vehicle control apparatus of claim 9, wherein in response to selection of the first zonal signal processing device among a plurality of zonal signal processing devices and replacement of the network controller of the central signal processing device while an abnormality in the network controller of the central signal processing device, the first zonal signal processing device is activate and operate at least a portion of a network controller in the first zonal signal processing device.

11. The vehicle control apparatus of claim 9, wherein in response to not receiving an echo reply message within a predetermined period of time from the network controller of the central signal processing device, a communication manager of the first zonal signal processing device is configured to transmit an activation signal to a Software Defined Network (SDN) controller in the network controller of the first zonal signal processing device, and the SDN controller in the network controller of the first zonal signal processing device is activated based on the activation signal.

12. The vehicle control apparatus of claim 9, wherein the communication manager of the first zonal signal processing device is configured to:
connect a first port to the SDN controller,
connect a second port to the network switch, and
connect the first port to a third port and a fourth port,
wherein the communication manager of the first zonal signal processing device is connected to the communication manager in the central signal processing device through the third port and connected to a communication manager in a second zonal signal processing device through the fourth port.

13. The vehicle control apparatus of claim 9, wherein the first zonal signal processing device is configured to:
transmit an echo request message, including resource information of the processor, to the central signal processing device, and
receive an echo reply message, including information regarding the selected candidate zonal signal processing device, from the central signal processing device.

14. The vehicle control apparatus of claim 9, wherein the first zonal signal processing device is configured to transmit an echo request message, including resource information of the processor, to the central signal processing device, and
wherein in response to not receiving a subsequent echo reply message after receiving a first echo reply message, including information regarding the selected candidate zonal signal processing device and network information access key information, from the central signal processing device, the first zonal signal processing device is configured to activate at least a portion of the network controller for operation.

15. The vehicle control apparatus of claim 9, wherein the central signal processing device is configured to :
receive an echo request message from the at least one zonal signal processing device,
select a candidate zonal signal processing device for replacing the network controller based on processor resource information, included in the echo request message, of a processor in each zonal signal processing device, and
transmit an echo reply message including information regarding the selected candidate zonal signal processing device.

16. The vehicle control apparatus of claim 9, wherein the central signal processing device is configured to transmit an echo reply message, including information regarding the selected candidate zonal signal processing device and network information access key information, to the selected zonal signal processing device.

17. The vehicle control apparatus of claim 9, wherein the central signal processing device is configured to :
transmit a first echo reply message, including information regarding the selected candidate zonal signal processing device and network information access key information, to the selected zonal signal processing device, and
transmit a second echo reply message, including information regarding the selected candidate zonal signal processing device, to an unselected zonal signal processing device.

18. The vehicle control apparatus of claim 9, wherein the central signal processing device is configured to :
execute an application, and
execute a network configuration interface configured to receive a network configuration request from the application and transmit network configuration data to the application.

19. The vehicle control apparatus of claim 18, wherein the network configuration interface in the central signal processing device is connected to the application and the network controller in the central signal processing device, and
wherein after operation of the network controller in the central signal processing device stops, the network configuration interface in the central signal processing device is connected to the application and a network controller in the selected candidate zonal signal processing device.

20. The vehicle control apparatus of claim 9, wherein in response to receiving an echo request message, the central signal processing device is configured to select a candidate zonal signal processing device and transmit an echo reply message corresponding to the echo request message.
